# EUROPEAN PATENT APPLICATION

(11) **EP 1 617 052 A1**
(43) Date of publication of application: **18.01.2006**
(21) Application number: 03774039.6
(22) Date of filing: 19.11.2003
(51) Int. Cl.: F01N 3/34, F16K 31/126

(54) **DIAPHRAGM AIR VALVE AND SECONDARY AIR-CONTROLLING DEVICE FOR INTERNAL COMBUSTION ENGINE**

(30) Priority: 26.12.2002 JP 2002375910; 29.01.2003 JP 2003020891
(71) Applicant: MIKUNI CORPORATION, Chiyoda-ku, Tokyo 101-0021 (JP)
(72) Inventor: TASHIRO, Motomichi, c/o MIKUNI CORPORATION, Odawara-shi, Kanagawa 250-0055 (JP); SUZUKI, Yasuo, c/o MIKUNI CORPORATION, Odawara-shi, Kanagawa 250-0055 (JP); SATO, Tsuyoshi, c/o MIKUNI CORPORATION, Odawara-shi, Kanagawa 250-0055 (JP)
(74) Representative: Betten, Jürgen
(86) International application number: PCT/JP2003/014696
(87) International publication number: WO 2004/061280

(57) **Abstract**

The object is to provide a diaphragm-type air valve and second air control apparatus for an internal combustion engine which can prevent afterburning at the time of quick deceleration and exhaust noise leakage at the time of quick acceleration, and which reliably ensures exhaust gas clarification operation in the rest of the driving range.

It comprises a valve body 36 which is activated by a diaphragm 34, two valve seats 37, 38 which are disposed at both sides of the moving direction of the valve body 36 and is opened and closed selectively by the valve body 36, and urging means which urges the valve body 36 towards one valve seat 37, and the urging means is constructed from a pair of springs 39a, 39b which are disposed in series and which elastic coefficients are different from each other.

## Description

### BACKGROUND OF THE INVENTION

### 1. Field of the Invention

The present invention relates to a diaphragm-type air valve, and particularly relates to a diaphragm-type air valve which is suitable for a secondary air control apparatus for an internal combustion engine.

### 2. Description of the Related Art

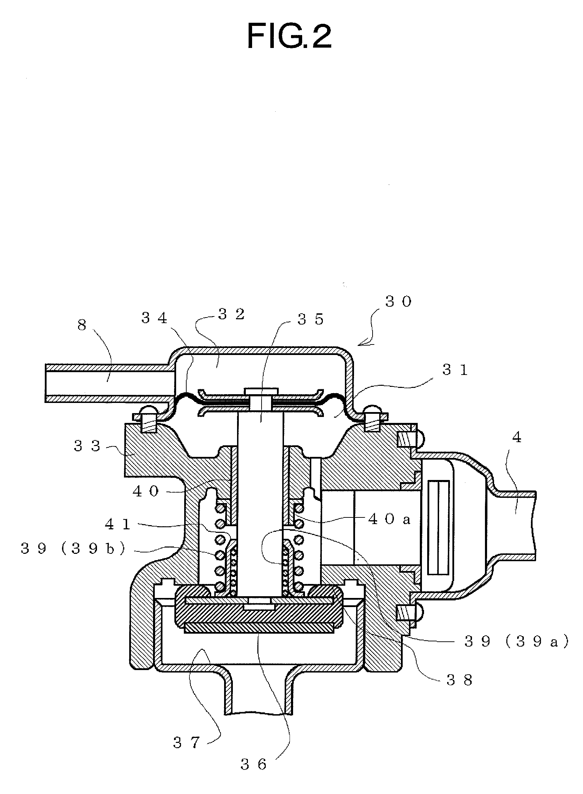

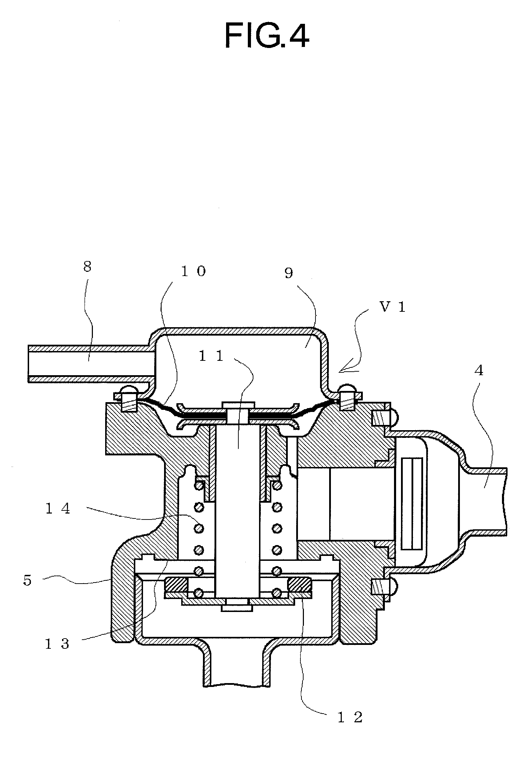

For example, a structure shown in Fig. 4 is known as a conventional diaphragm-type air valve V utilized for a secondary air control apparatus for an internal combustion engine. Patent document No. 1, Japanese Patent Laid-open 2001-227506 (Fig. 2), is an example of the structure.

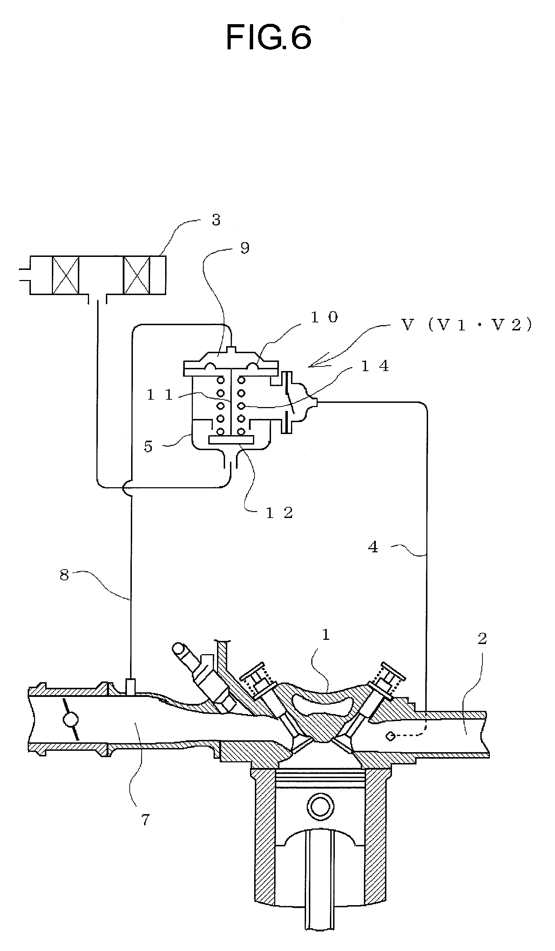

As shown in Fig. 6, the diaphragm-type air valve of the abovementioned is disposed midway on a secondary air passage 4 which is a fluid passage connecting an exhaust passage 2 of an internal combustion engine 1 and an air cleaner 3, and controls secondary air supply to the exhaust passage 2 in accordance with driving states of the internal combustion engine 1.

Specifically, a diaphragm-type air valve V1 shown in Fig. 4 comprises a closed case-shaped body 5, a pressure actuating room 9 disposed in the body 5 and connected to an intake passage 7 of the internal combustion engine 1 through a pressure introducing pipe 8, a diaphragm 10 activated in accordance with the pressure in the pressure actuating room 9, a movable rod 11 attached to the diaphragm 10, a valve body 12 attached to the movable rod 11, a valve seat 13 formed in the secondary air passage 4 and being opened and closed by the valve body 12, and a spring 14 urging the valve body 12 in a direction being apart from the valve seat 13.

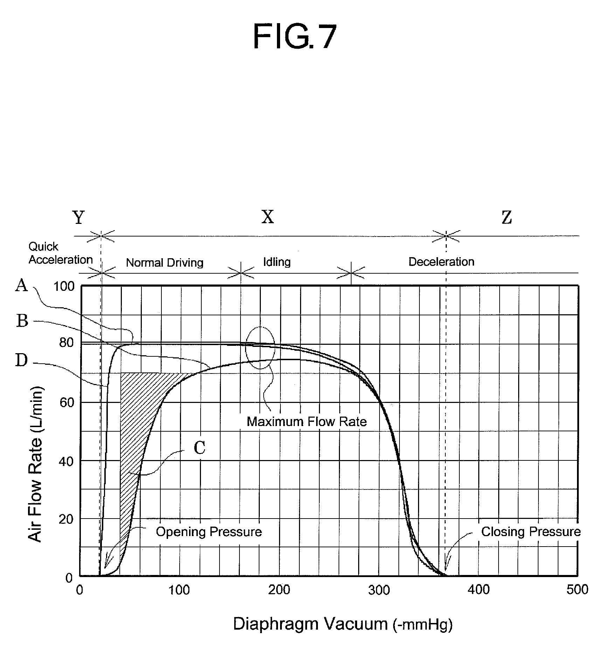

Then, as shown by a curved line A in Fig. 7, the diaphragm-type air valve V1 opens the valve seat 13 (namely the secondary air passage 4), by the spring 14 when the negative pressure in the pressure applying room 9 is lower than a specific value, in the range from idling to quick acceleration. With this operation, the secondary air is supplied to the exhaust passage 2 so that unburned gas in the exhaust gas which is exhausted through the exhaust passage 2 is burned and exhaust gas is clarified. Further, during quick deceleration, when the negative pressure in the intake passage 7 is increased and the negative pressure in the pressure applying room 9 becomes higher than the specific value, the diaphragm 10 moves the movable rod 11 with the valve body 12 against the urging force of the spring 14 and closes the valve seat 13. With this operation, the supply of secondary air to the exhaust passage 2 is stopped and afterburning is prevented.

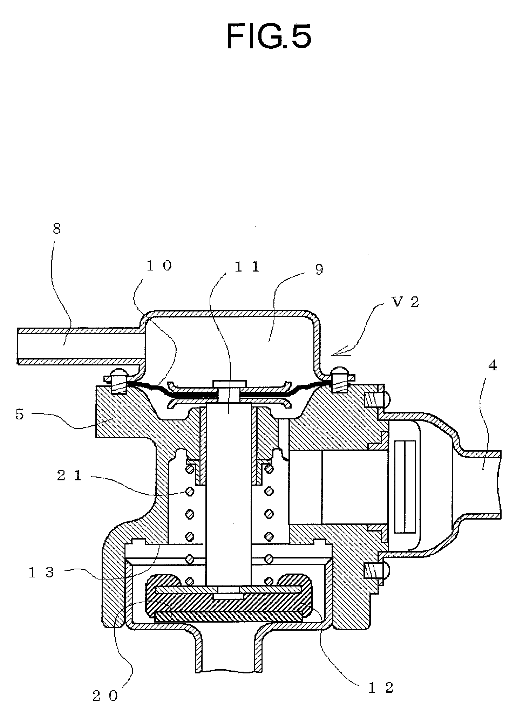

Furthermore, V2 in Fig. 5 shows a structure of another type of diaphragm-type air valve.

With the diaphragm-type air valve V2, two valve seats 13, 20 are formed at both sides to sandwich the valve body 12. When the negative pressure in the pressure applying room 9 is lower than a first specific value (shown as opening pressure in Fig. 7), one valve seat 20 is closed by the urging force of a spring 21. Then, when the negative pressure in the pressure applying room 9 becomes higher than a second specific value which is higher than the first specific value (shown as closing pressure in Fig. 7), the valve body 12 moves against the urging force of the spring 21 so as to close the other valve seat 13. (See curved line B in Fig. 7.)

Here, with the diaphragm-type air valve V1 shown in Fig. 4, especially at the time of quick acceleration, it is conceivable that exhaust noise generated at the exhaust passage 2 may leak through the second air passage 4, because the valve seat 13 is at an opened state.

On the other hand, with the diaphragm-type air valve V2 shown in Fig. 5, by closing the one valve seat 20 at the time of quick acceleration, it is possible to prevent the leakage of the exhaust noise and solve the abovementioned problem. However, since both the opening-closing pressure of the one valve seat 20 and that of the other valve seat 13 are determined by the setting of the spring 21, the one valve seat 20 starts to open in the range of normal driving, as shown by the curved line B in Fig. 7.

Therefore, the supply of the second air is short in the range, shown by a character C in Fig. 7, where exhaust gas clarification during normal driving is needed. Here, when the setting of the spring 21 is changed so as to be capable to supply the second air at the range of the character C, the opening-closing pressure of the valve seat 13 is lowered. This causes a problem that the second air is short at the time of deceleration or idling.

The present invention was devised in the light of the conventional problems. The object is to provide a diaphragm-type air valve and second air control apparatus for an internal combustion engine which can prevent afterburning at the time of quick deceleration and exhaust noise leakage at the time of quick acceleration, and which reliably ensures exhaust gas clarification operation in the rest of the driving range.

### SUMMARY OF THE INVENTION

To achieve the abovementioned object, the diaphragm-type air valve of claim 1 of the present invention comprises a valve body which is attached to a movable rod, two valve seats which are disposed at both sides in the moving direction of the valve body and are opened and closed selectively by the valve body, urging means which urges the valve body towards one of the two valve seats, and a pressure applying room which receives air pressure and acts to move the valve body from the one valve seat towards the other valve seat, and the urging means is constructed from a pair of springs which are disposed in series and which elastic coefficients are different from each other.

With the diaphragm-type air valve of claim 2 of the present invention, the elastic coefficients of the pair of springs are set so that the one valve seat opens when the negative pressure in the pressure applying room of claim 1 is equal to or above a predetermined first specific value while compressing the spring which has a smaller elastic coefficient, and the other valve seat closes when the negative pressure in the pressure applying room is equal to or above a second specific value which is higher than the first specific value while compressing the spring which has a larger elastic coefficient.

With the diaphragm-type air valve of claim 3 of the present invention, the elastic coefficients of the pair of springs are set so that the valve body of claim 1 or claim 2 is maintained at a specific position against specific pressure change of the pressure applying room when the valve body is at an opened state from the both valve seats.

The secondary air control apparatus for an internal combustion engine of claim 4 of the present invention utilizes the diaphragm-type air valve of any one of claim 1 through 3, and the one valve seat side is connected to a air-cleaner, and the other valve seat side is connected to an exhaust passage, and secondary air is provided in a direction from the one valve seat side towards the other valve seat when the valve body is at an opened state from the both valve seats introducing intake manifold pressure to the pressure applying room.

With the secondary air control apparatus for an internal combustion engine of claim 5, a valve is disposed at the downstream side of the other valve seat of claim 4 to prevent backflow of the secondary air.

With the present invention, when the air valve is applied to the secondary air control apparatus for an internal combustion engine, the secondary air is supplied to the exhaust passage to clarify exhaust gas in the range where the secondary air has to be supplied, namely, in all ranges from idling to normal driving. Further, the supply of the secondary air to the exhaust passage is stopped in the range where afterburning has to be prevented, namely quick deceleration etc. Furthermore, at the time of quick acceleration, leakage of the exhaust noise is prevented by closing the secondary air passage, so as to keep the internal combustion engine quiet.

### BRIEF DESCRIPTION OF THE DRAWINGS

Fig. 1 is a longitudinal sectional view showing an embodiment of the present invention.
Fig. 2 is a longitudinal sectional view to explain the operation of the embodiment of the present invention.
Fig. 3 is a longitudinal sectional view to explain the operation of the embodiment of the present invention.
Fig. 4 is a longitudinal sectional view showing a related art.
Fig. 5 is a longitudinal sectional view showing another related art.
Fig. 6 is a schematic diagram showing a second air control apparatus for an internal combustion engine.
Fig. 7 is a chart showing characteristics of the second air supply in accordance with driving states of the internal combustion engine.

### DESCRIPTION OF THE PREFFERED EMBODIMENT

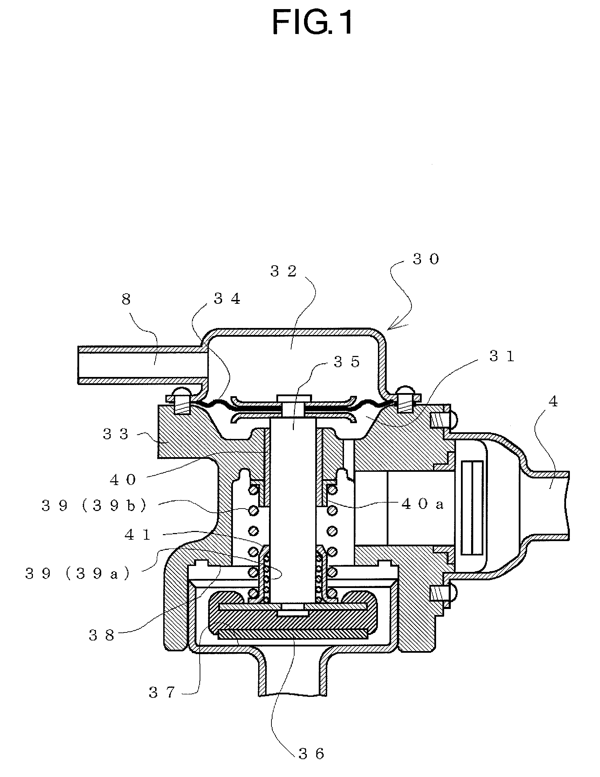

An embodiment of the present invention is explained in the following with reference to Fig. 1 through Fig. 3.

Here, in the following explanations, the same numerical note is given to the same part in Fig.4 through Fig. 6 to simplify the explanation.

The embodiment of the diaphragm-type air valve, shown by numeral 30 in Fig. 1 through Fig.3, is suitable for a secondary air control apparatus for an internal combustion engine 1 shown in Fig. 6.

The diaphragm-type air valve 30 of this embodiment comprises a valve body 36 attached to a movable rod 35, two valve seats 37, 38 disposed at both sides in the moving direction of the valve body 36 and being opened and closed selectively by the valve body 36, a spring 39 urging the valve body 36 towards the one valve seat 37, a pressure applying room 32 to which negative pressure is applied through the pressure introducing pipe 8 so that the valve body 36 receives force in the direction to be apart from the one valve seat 37. Here, the spring 39 is constructed from a pair of springs 39a, 39b which are disposed in series and which have different elastic coefficients from each other.

More precisely, a guide 40 which slidably supports the movable rod 35 is integrally attached in a body 33.

Further, a movable ring 41 is slidably fitted at a position having certain distance from the guide 40 of the movable rod 35. The one spring 39a is disposed between the movable ring 41 and the valve body 36, and the other spring 39b is disposed between the movable ring 41 and the guide 40 via a positioning ring 40a.

In this embodiment, the elastic coefficient of the one spring 39a is set to be smaller than that of the other spring 39b. The elastic coefficients of the pair of springs 39a, 39b are set so that the one valve seat 37 opens when the negative pressure in the pressure applying room 32 is equal to or above the predetermined first specific value (opening pressure in Fig. 7), compressing the one spring 39a which has a smaller elastic coefficient, and the other valve seat 38 closes when the negative pressure in the pressure applying room 32 is equal to or above the second specific value (closing pressure in Fig. 7) which is higher than the first specific value, compressing the other spring 39b which has a larger elastic coefficient.

With this embodiment, the pressure applying room 32 is connected to the intake passage 7 through the pressure introducing pipe 8. The second air control apparatus is constructed from the diaphragm-type air valve 30, the secondary air passage 4, the pressure introducing pipe 8, and so on.

The diaphragm-type air valve 30 of this embodiment constructed as described above performs supply control of the secondary air in accordance with driving states of the internal combustion engine 1, as shown by a curved line D in Fig. 7.

Specifically, when the negative pressure in the pressure applying room 32 is between the first specific value and the second specific value in the range from idling to normal driving (range X in Fig. 7), both valve seats 37, 38 are at an opened state, compressing the one spring 39a which has a smaller elastic coefficient.

In this manner, secondary air is supplied to the exhaust passage 2 through the diaphragm-type air valve 30, and clarification effect of the exhaust gas is performed.

In this embodiment, only the one spring 39a which has a smaller elastic coefficient is compressed, but the other spring 39b which has a larger elastic coefficient is set at an elastic coefficient so that the other spring 39b is not compressed at least until the moving ring 41 contacts the valve body 36. Therefore, the valve body 36 is maintained at an opened position even if the negative pressure in the pressure applying room 32 varies within a specific range.

Further, when the negative pressure of the pressure applying room 32 is higher than the second specific value, at the time of quick deceleration (range Z in Fig. 7) for example, both of the pair of springs 39a, 39b are compressed. Consequently, the other valve seat 38 is closed as shown in Fig. 2.

With this operation, the secondary air supply to the exhaust passage 2 is stopped, and afterburning is prevented.

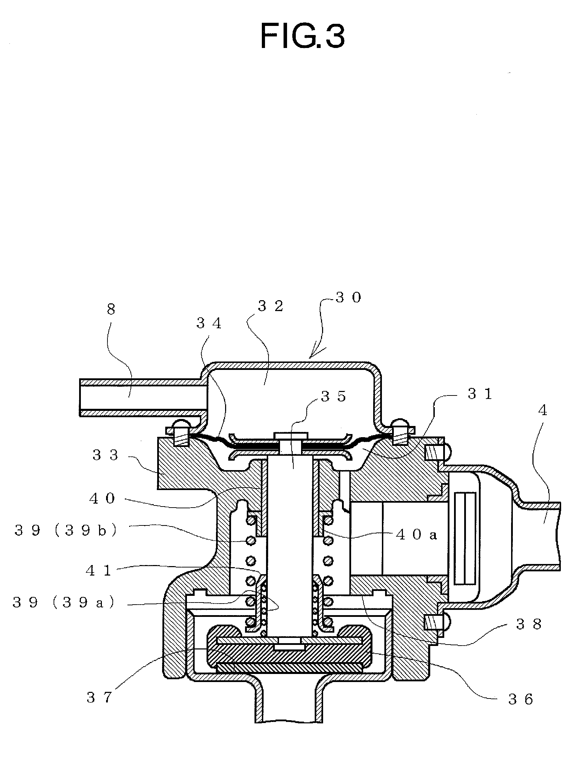

Furthermore, when the negative pressure of the pressure applying room 32 is lower than the first specific value, at the time of quick acceleration (range Y in Fig. 7) for example, the one valve seat 37 is closed by the urging force of the pair of springs 39a, 39b, as shown in Fig. 3.

With this operation, the second air passage 4 is closed at the time of quick acceleration etc. Therefore, leakage of the exhaust noise is prevented and the internal combustion engine 1 can be kept quiet.

Then, at the border zone between range X and range Z and the border zone between range X and range Y, the moving characteristic of the valve body 36 can be set freely with each characteristic of the spring 39a, 39b. Therefore, the secondary air amount flowing in the secondary air passage 4 can be supplied in the needed driving range.

In this manner, with this embodiment, when the abovementioned air valve is applied to the secondary air control apparatus for an internal combustion engine 1, the secondary air is supplied to the exhaust passage 2 to clarify exhaust gas in the range where the secondary air has to be supplied, namely, in the all ranges from idling to normal driving. Further, the supply of the secondary air to the exhaust passage 2 is stopped in the range where afterburning has to be prevented, namely quick deceleration etc. Furthermore, at the time of quick acceleration, leakage of the exhaust noise is prevented by closing the secondary air passage 4, so as to keep the internal combustion engine 1 quiet.

Here, shapes, dimensions and so on of various components of the abovementioned embodiment are just examples, and various modifications are possible in accordance with design changes etc.

For example, it is possible to dispose a check valve at the downstream side of the other valve seat 38 to prevent exhaust gas from back-flowing from the exhaust passage 2 to the diaphragm-type air valve 30. In this manner, it is possible to prevent development of chattering of the valve body 36 which is caused by pulsating flow of exhaust gas etc., and the generation of the noise can be further reduced.

In the embodiment, the lower room 31, which is the opposite side room sandwiching a diaphragm of the pressure applying room 32, is formed to be connected to the secondary air passage 4. However, not limited to this structure, the lower room 31 can be opened to the air.

Further, in the embodiment, a pair of springs is disposed in the secondary air passage 4. However, not limited to this structure, it can be disposed in the pressure applying room 32 to have the same effect. Furthermore, the spring can be disposed to urge the valve body 36 towards the other valve seat 38.

## Claims

1. A diaphragm-type air valve, comprising:
a valve body which is attached to a movable rod;
two valve seats which are disposed at both sides in the moving direction of said valve body, and are opened and closed selectively by said valve body;
urging means which urges said valve body towards one of said two valve seats; and
a pressure applying room which receives air pressure and acts to move said valve body from said one valve seat towards the other valve seat;
wherein said urging means is constructed from a pair of springs which are disposed in series and which elastic coefficients are different from each other.

2. The diaphragm-type air valve according to claim 1, wherein the elastic coefficients of said pair of springs are set so that said one valve seat opens when the negative pressure in said pressure applying room is equal to or above a predetermined first specific value while compressing the spring which has a smaller elastic coefficient, and said other valve seat closes when the negative pressure in said pressure applying room is equal to or above a second specific value which is higher than the first specific value while compressing the spring which has a larger elastic coefficient.

3. The diaphragm-type air valve according to claim 1 or claim 2, wherein the elastic coefficients of said pair of springs are set so that said valve body is maintained at a specific position against specific pressure change of said pressure applying room when said valve body is at an opened state from said both valve seats.

4. A secondary air control apparatus for an internal combustion engine to which the diaphragm-type air valve according to any one of claim 1 through 3 is assembled, wherein said one valve seat side is connected to a air-cleaner, and said other valve seat side is connected to an exhaust passage, and secondary air is provided in a direction from said one valve seat side towards said other valve seat when said valve body is at an opened state from said both valve seats introducing intake manifold pressure to said pressure applying room.

5. The secondary air control apparatus for an internal combustion engine according to claim 4, wherein a check valve is disposed at the downstream side of said other valve seat to prevent backflow of said secondary air.
